# EUROPEAN PATENT APPLICATION

(11) **EP 1 958 815 A1**
(43) Date of publication of application: **20.08.2008**
(21) Application number: 08101607.3
(22) Date of filing: 13.02.2008
(51) Int. Cl.: B60K 35/00, B60K 37/02

(54) **Vehicle meter display altering apparatus**

(30) Priority: 15.02.2007 JP 2007000905 U
(71) Applicant: Trade Winds Inc., Nagoya-shi Nagoya-shi, 460-0011 (JP)
(72) Inventor: Hatanaka, Makato, Nagoya-shi, Aichi 460-0011 (JP)
(74) Representative: Dossmann, Gérard

(57) **Abstract**

A vehicle meter display altering apparatus (1) has a thin plate-shaped light source member (2), a thin plate-shaped analog speed meter display member (3), and a driver (4) for the thin plate-shaped light source member. The thin plate-shaped light source member (2) has an opening (22) for allowing a pointer of a meter of a vehicle to pass therethrough and is made of an electroluminescent element removably mounted on a display panel part (70) of a vehicle meter indicator (7). The thin plate-shaped analog speed meter display member (3) has a speed meter display part (31) which corresponds to an analog speed meter display (71) of the display panel part (70), has a display mode different from that of the analog speed meter display (71), and is illuminated from a back surface side thereof by the thin plate-shaped light source member (2); and an open part (32) for allowing the pointer to pass therethrough.

## Description

The present invention relates to a vehicle meter display altering apparatus (hereinafter "vehicle" is omitted and often referred to as merely "meter display altering apparatus") in which an analog speed meter display pattern can be altered without removing a standard meter originally mounted on a vehicle body.

Standard parts mounted on a vehicle body are increasingly customized year by year by remodeling them, and needs of customizing the parts are increasing. Particularly a speed meter of a vehicle meter panel has a larger area than other meters and is a portion which is watched most carefully. Thus there are many potential needs of customizing the speed meter.

Because even an analog-type speed meter is a precise part, in recent years, a pointer of the speed meter is unremovably mounted on the speed meter. Thus in the present situation, it is impossible to disassemble the speed meter easily to alter a display panel.

The meter display kit is disclosed in Japanese Utility Model Registration No. 3104810. The meter display kit has the EL emission portion which is mounted on the meter display plate, together with the wire pattern by layering the EL emission portion on the meter display plate installed on a vehicle body. The EL emission portion includes characters, figures, marks, graduations or numerical values. The meter display kit includes the EL display sheet having the EL emission portion which makes a face light emission upon energization; the LED bulb which is provided instead of an incandescent electric lamp which irradiates the back light through the transparent plate provided on the back surface of the meter display plate and allows the through-holes formed through the EL display sheet to make a face light emission upon energization; and the voltage-adjusting circuit connected with the power unit to adjustably supply a power supply voltage to the EL display sheet and the LED bulb upon input for starting a vehicle.

In the meter display kit disclosed in Japanese Utility Model Registration No. 3104810, a user can easily alter an ordinary meter display to a black-out meter display having a favorable visibility by freely selecting a design at a low cost.

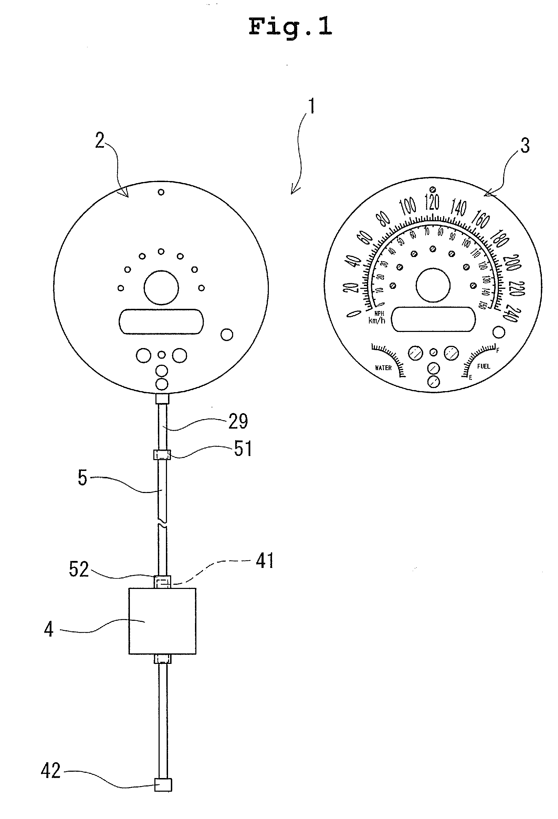

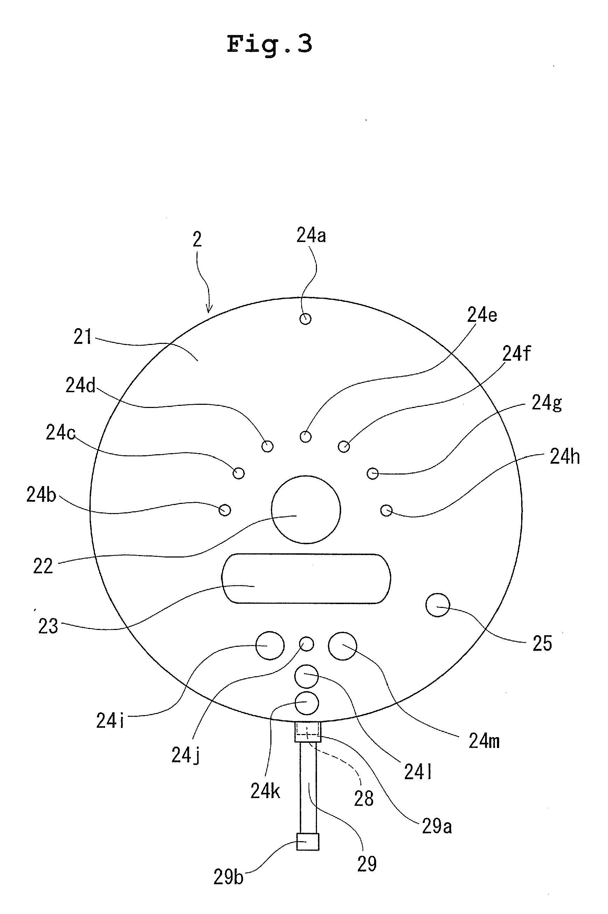

But in the meter display kit disclosed in Japanese Utility Model Registration No. 3104810, the EL emission portion including the characters, figures, marks, graduations or numerical values is formed on the EL display sheet, together with the wire pattern. Because the characters, figures, marks, graduations or numerical values are directly formed on the EL display sheet, the EL display sheet has a low degree of freedom. As shown in Figs. 1 through 3 of the Japanese Utility Model Registration No. 3104810, the EL display sheet has a large number of cut-out portions. Therefore the EL display sheet is incapable of covering the entire front surface of the display panel portion, which is incomplete for customizing the meter display kit.

It is an object of the present invention to provide a vehicle meter display altering apparatus which allows an almost complete customization of an entire front surface of a display panel part provided with an analog speed meter display and which provides a high selectivity of a design for the customization thereof.

The above-described object is achieved by a vehicle meter display altering apparatus.

A vehicle meter display altering apparatus, for use in a vehicle meter indicator, essentially including a display panel part having an analog speed meter display; and a pointer for said analog speed meter display, said vehicle meter display altering apparatus comprises a thin plate-shaped light source member which has an opening for allowing said pointer to pass therethrough without separating said pointer from said vehicle meter indicator and is made of an electroluminescent element, and said thin plate-shaped light source member has a configuration corresponding to that of said display panel part, and is capable of covering almost said entire front surface of said display panel part including said analog speed meter display, further said thin plate-shaped light source member has a surface in a substantially solid color and is removably mounted on said display panel part; a thin plate-shaped analog speed meter display member having an analog speed meter display part which corresponds to said analog speed meter display of said vehicle meter indicator, has a display mode different from that of said analog speed meter display, and is illuminated from a back surface thereof by said thin plate-shaped light source member, and an open part, provided at a position corresponding to said opening of said thin plate-shaped light source member, for allowing said pointer to pass therethrough without separating said pointer from said vehicle meter indicator, further said thin plate-shaped analog speed meter display member is placed on or fixed to a front surface of said thin plate-shaped light source member to cover said entire front surface of said thin plate-shaped light source member; and a driver for said thin plate-shaped light source member connectable with a power unit for a vehicle.
Fig. 1 is a front view of a vehicle meter display altering apparatus of an embodiment of the present invention.
Fig. 2 is an explanatory view for explaining the operation of the vehicle meter display altering apparatus of the present invention.
Fig. 3 is a front view of a thin plate-shaped light source member for use in the vehicle meter display altering apparatus shown in Fig.1.
Fig. 4 is a front view of a vehicle meter indicator for which the vehicle meter display altering apparatus shown in Fig. 1 is used.

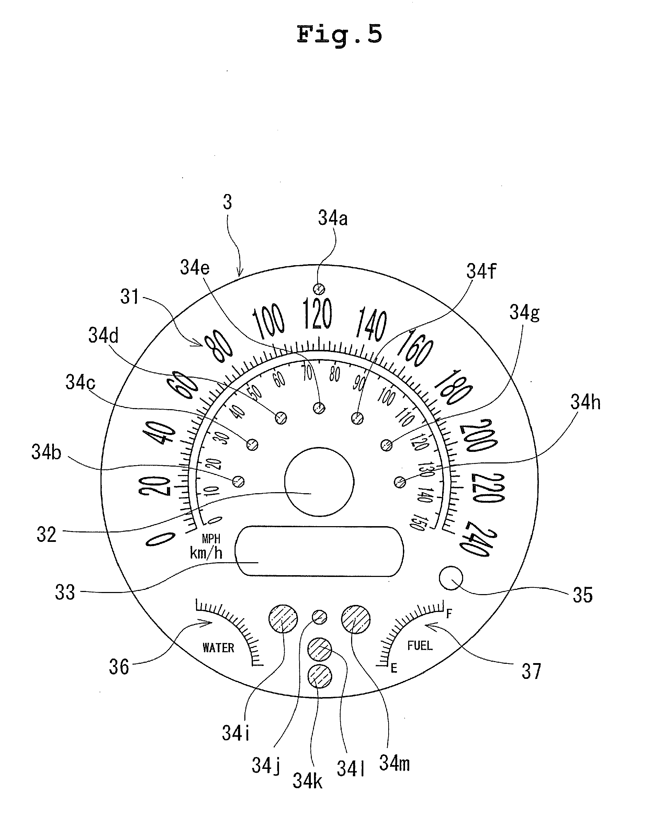

Fig. 5 is a front view of a thin plate-shaped analog speed meter display member for use in the vehicle meter display altering apparatus shown in Fig.1.
Fig. 6 is a front view of a thin plate-shaped analog speed meter display member for use in a vehicle meter display altering apparatus of another embodiment of the present invention.
Fig. 7 is a front view of a thin plate-shaped analog speed meter display member for use in a vehicle meter display altering apparatus of still another embodiment of the present invention.
Fig. 8 is a front view of a vehicle meter display altering apparatus of still another embodiment of the present invention.

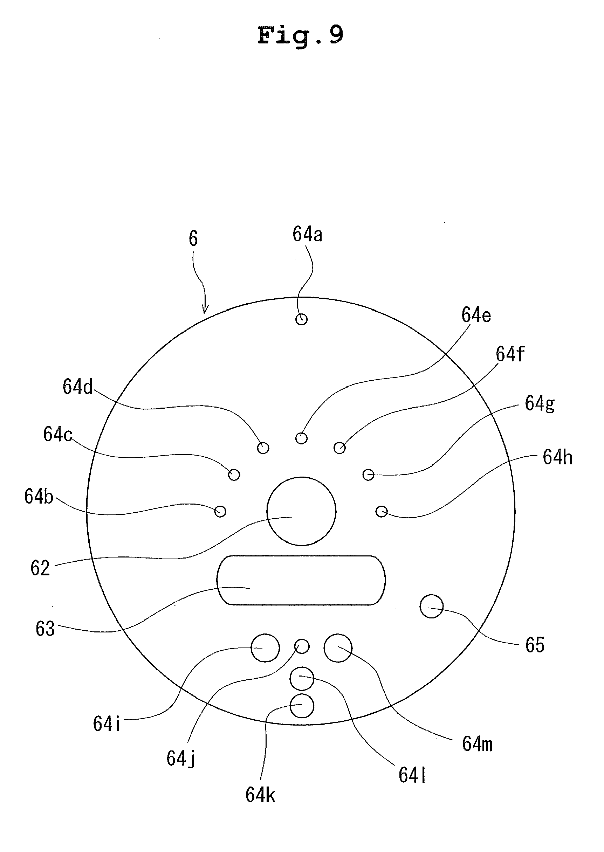

Fig. 9 is a front view of a thin film-shaped transparent color sheet for use in the vehicle meter display altering apparatus shown in Fig. 8.

The vehicle meter display altering apparatus of the present invention is described below by using the embodiments shown in the drawings.

A vehicle meter display altering apparatus (hereinafter often referred to as merely meter display altering apparatus) 1 of the present invention is used for a vehicle meter indicator (hereinafter often referred to as merely meter indicator) 7 essentially including a display panel part 70 having an analog speed meter display 71 and a pointer 72 for the analog speed meter display 71.

The meter display altering apparatus 1 has a thin plate-shaped light source member 2 (hereinafter often referred to as merely light source member 2), a thin plate-shaped analog speed meter display member 3 (hereinafter often referred to as merely analog speed meter display member 3), and a driver 4 for the thin plate-shaped light source member (hereinafter often referred to as merely driver 4 for the light source member).

The light source member 2 is removably mounted on the display panel part 70. The light source member 2 has a surface in a substantially solid color. The light source member 2 has an opening 22 for allowing the pointer 72 to pass therethrough without separating the pointer 72 from the meter indicator 7 and is made of an electroluminescent element which has a configuration corresponding to that of the display panel part 70, makes the analog speed meter display 71 unvisible, is capable of covering almost the entire front surface of the display panel part 70 including the analog speed meter display 71.

The analog speed meter display member 3 has an analog speed meter display part 31 which corresponds to the analog speed meter display 71 of the meter indicator 7, has a display mode different from that of the analog speed meter display 71, and is illuminated from a back surface thereof by the light source member 2; and an open part 32, provided at a position corresponding to the opening 22 of the light source member 2, for allowing the pointer 72 to pass therethrough without separating the pointer 72 from the meter indicator 7. The analog speed meter display member 3 is placed on or fixed to a front surface of the light source member 2 to cover the entire front surface of the light source member 2.

The driver 4 for the light source member is connectable with a power unit for the vehicle and serves as a means for allowing the light source member 2 to emit light beams.

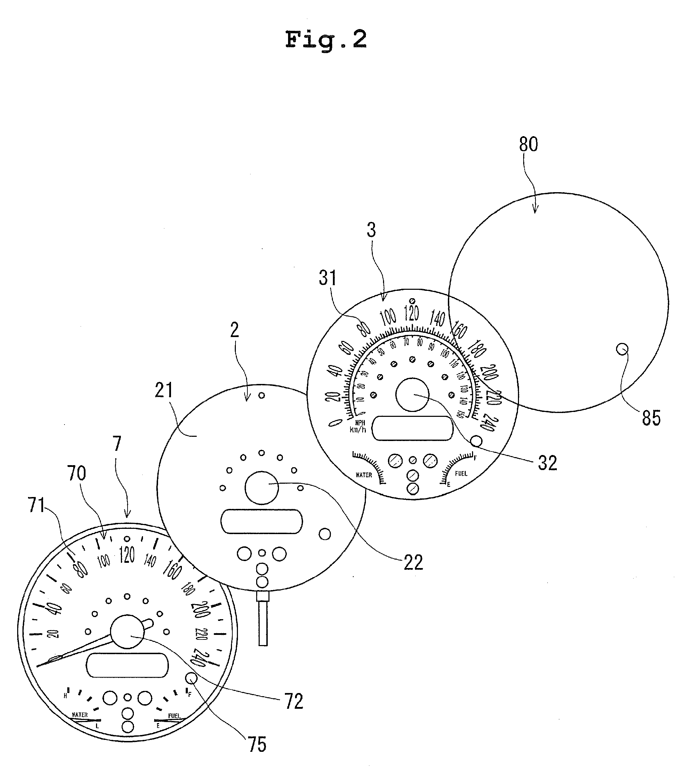

As shown in Fig. 2, the meter indicator 7 has the display panel part 70 and a transparent plate 80 covering a front surface of the display panel part 70. The light source member 2 of the meter display altering apparatus 1 and the analog speed meter display member 3 thereof shown in Fig. 1 can be disposed between the display panel part 70 and the pointer 72. The thin plate-shaped light source member 2 and the thin plate-shaped analog speed meter display member 3 can be disposed between the display panel part 70 of the vehicle meter indicator and the pointer 72 of the vehicle meter indicator together.

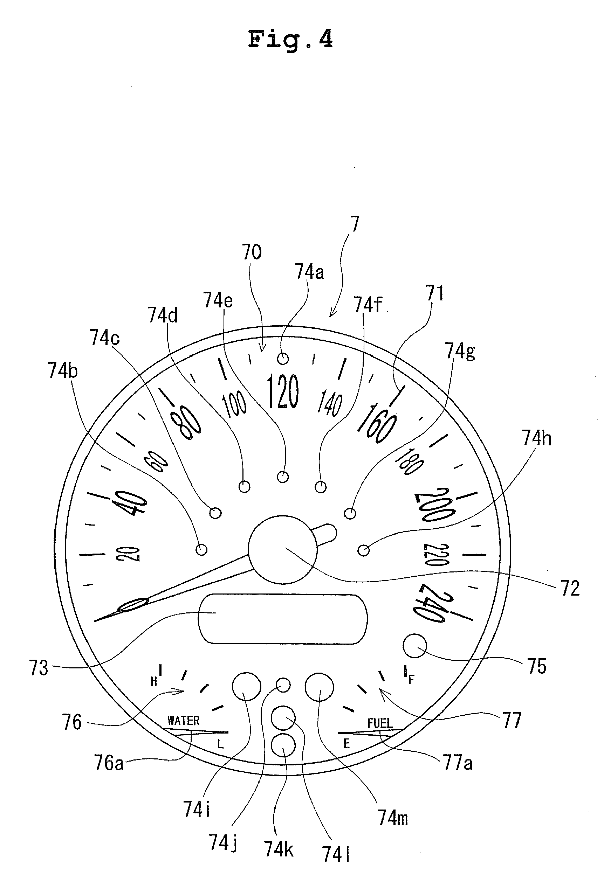

As shown in Figs. 2 and 4, the display panel part 70 of the meter indicator 7 for which the meter display altering apparatus 1 is used has the analog speed meter display 71, the pointer 72, a distance display portion 73, auxiliary light emission display portions 74a through 74m, a button 75 for the distance display portion, a water temperature display portion 76, a water temperature display pointer 76a, a fuel display portion 77, and a fuel display pointer 77a. As the auxiliary light emission display portion, high-beam, an ABS, an air bag, a battery, engine oil, and the like displaying situations are conceivable.

An opening 85 for inserting the button 75 for the distance display portion therethrough is formed through the transparent plate 80 covering the entire upper portion of the display panel part 70.

The light source member 2 consists of the electroluminescent element and has a surface in substantially solid color. The light source member 2 corresponds to the display panel part 70 of the meter indicator 7. More specifically, the light source member 2 has the opening 22 for allowing the pointer 72 to pass therethrough without separating the pointer 72 from the meter indicator 7, and an open portion 23 for making the distance display portion to be visible, open portions 24a through 24m for allowing the auxiliary light emission display portions 74a through 74m to be visible, and an open portion 25 for inserting the button 75 for the distance display portion therethrough.

The light source member 2 has a configuration corresponding to that of the display panel part 70, makes the analog speed meter display 71 unvisible, is capable of covering the entire front surface of the display panel part 70 including the analog speed meter display 71. The thickness of the light source member 2 is so set that the sum of the analog speed meter display member 3 which will be described later and the light source member 2 is smaller than the dimension of the clearance between the surface of the display panel part 70 of the meter indicator 7 and the pointer 72 thereof. Therefore when the light source member 2 and the analog speed meter display member 3 are disposed between the display panel part 70 of the meter indicator 7 and the pointer 72 thereof, the movement of the pointer 72 is not inhibited thereby.

As the construction of the light source member 2 consisting of the electroluminescent element, a known construction is used. The light source member 2 is a plane illuminant made of the sheet-shaped electroluminescence (hereinafter referred to as EL) element. The display surface of the EL element is self-electroluminescent. The light source member 2 of this embodiment emits light beams in white or almost white. The light source member 2 may emit light beams not in white but in colors (for example, red, blue, green) or in luminescent colors, including white color, which can be selected. The light source member 2 is constructed of a back surface protection film (not shown), a back-surface electrode (not shown), an insulation layer (not shown), a light-emitting layer (not shown), and a front-surface transparent electrode (not shown) layered one upon another in this order. The front-surface transparent electrode forms the light-emitting surface. One end 29a of a cord 29 is fixed to a contact portion 28 of the back-surface electrode and the front-surface transparent electrode. The other end of the cord 29 is provided with a connector 29b to be connected with a connector 51 of a connection cable 5.

The driver 4 for the light source member has a driving circuit for allowing the light source member 2 to emit light beams. As the driving circuit, a known driving circuit for allowing the EL element to emit light beams can be used. The driver 4 for the light source member has a connector 41 and a connector 42 to be connected with the power unit of the vehicle. Upon receipt of an electric power supplied by the power unit of the vehicle, the driver 4 for the light source member is actuated. The driver 4 for the light source member may have a function of selecting a luminescent color to be emitted by the light source member 2. For Example, the function of selecting the luminescent color is constructed by altering a voltage applied between the back-surface electrode of the light source member 2 and the front-surface transparent electrode thereof or the pulse width of the voltage.

The meter display altering apparatus 1 of this embodiment has a connection cable having the connector 51, disposed at one end thereof, which is to be removably connected with the light source member 2 and a connector 52, disposed at the other end thereof, which is to be removably connected with the connector 41 of the driver 4 for the light source member.

The analog speed meter display member 3 of this embodiment covers the entire front surface of the light source member 2. The analog speed meter display member 3 has a front surface equal to or a little larger than the light source member 2 in the size thereof. It is preferable that the front surface of the analog speed meter display member 3 is a little larger than the light source member 2. The analog speed meter display member 3 is made of a transparent film material on which necessary print is applied.

The analog speed meter display member 3 has the analog speed meter display part 31 which corresponds to the analog speed meter display 71 of the meter indicator 7 and is different from the analog speed meter display 71 in a display mode thereof. The analog speed meter display part 31 is illuminated from its back surface side by the light source member 2. The analog speed meter display member 3 has the open portion 32, disposed at a position corresponding to the opening 22 of the light source member 2 for passing the pointer therethrough, for allowing the pointer 72 to pass therethrough without separating the pointer 72 from the meter indicator 7; and an opening 35 for inserting the button 75 for the distance display portion therethrough.

In the meter display altering apparatus 1 of this embodiment, the light source member 2 has the open portion 23 for the distance display portion, and the analog speed meter display member 3 has an open portion 33 for the distance display portion. Therefore the distance display portion 73 of the display panel part 70 is not prevented from being visible.

The display member 3 has the open portion 33 for allowing the distance display portion to be visible and transparent portions 34a through 34m for allowing the auxiliary light emission display portions 74a through 74m to be visible respectively. Each of the transparent portions 34a through 34m is formed of an unprinted portion of a transparent film or a transparent printed portion thereof. The open portion 33 for the distance display portion provided on the display member 3 may be formed as a transparent portion for the distance display portion.

In the meter display altering apparatus 1 of this embodiment, the light source member 2 has the open portions 24a through 24m for the auxiliary light emission display portions, and the analog speed meter display member 3 has the transparent portions 34a through 34m for the auxiliary light emission display portions. Therefore the auxiliary light emission display portions 74a through 74m of the display panel part 70 of the meter indicator 7 is not prevented from being visible.

The display member 3 has a water temperature display portion 36 and a fuel display portion 37 formed by print. The water temperature display portion 36 of the display member 3 corresponds to the water temperature display portion 76 of the display panel part 70 and has a display mode different from that of the water temperature display portion 76. The water temperature display portion 36 is illuminated from the back surface side thereof by the light source member 2. The fuel display portion 37 of the display member 3 corresponds to the fuel display portion 77 of the display panel part 70 and has a display mode different from that of the fuel display portion 77. The fuel display portion 37 is illuminated from the back surface side thereof by the light source member 2.

The display member 3 of this embodiment has a background portion printed in a light color and the analog speed meter display part printed in a dark color (for example, black). Because the background portion is made bright by light beams emitted by the light source member 2, the analog speed meter display part can be recognized.

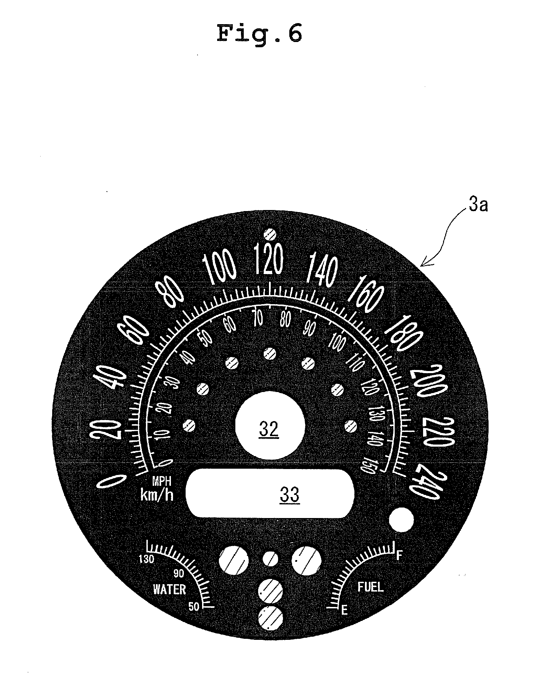

The design mode of the analog speed meter display member 3 is not limited to the above-described design mode, but the analog speed meter display member 3 may have a design as shown in Fig. 6. A thin plate-shaped analog speed meter display member 3a of this embodiment has a dark-colored background portion (for example, black, dark blue, dark green, and dark brown) which is not made substantially bright by the light beams emitted by the light source member. The analog display speed meter display part is printed in a white color or a light color. Therefore it is possible to recognize the analog speed meter display part by the light beams emitted by the light source member with the analog speed meter display part afloat. In the analog speed meter display part 3a of this embodiment, the water temperature display portion and the fuel display portion are printed in a white color or a light color. Therefore it is possible to recognize the water temperature display portion and the fuel display portion by the light beams emitted by the light source member with the water temperature display portion and the fuel display portion afloat. Preferably the analog speed meter display part 3a having the above-described design mode is so constructed that it has a little larger front surface than that of the light source member 2 and that light beams transmitted from the peripheral portion of the light source member 2 does not substantially leak. By so doing, light beams leak little to the outside of the display member 3a. Thus the analog speed meter display part applied to the display member 3a is clearly afloat.

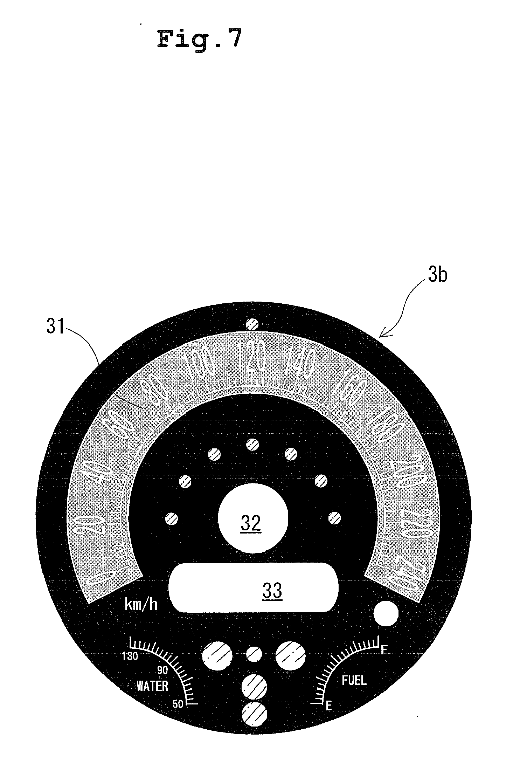

Like an analog speed meter display member 3b shown in Fig. 7, the analog speed meter display member 3b may have a beltlike colored portion, printed in a color different from the dark-colored background portion, which surrounds the analog speed meter display part. It is preferable that the beltlike colored portion has a color whose saturation is higher than that of the dark-colored background portion. In other words, it is preferable that the beltlike colored portion has a bright color. More specifically, it is preferable to select black, dark blue, dark green or dark brown as the dark-colored background portion. It is preferable to select blue, red or green as the beltlike colored portion.

As described above, the analog speed meter display member 3 is made of a transparent film base material and has a print portion. It is preferable that the print portion is formed on the back surface of the analog speed meter display member 3 and that the front surface of the analog speed meter display member 3 is the surface of the foundation of the transparent film base material. By so doing, printing ink-caused nonuniformity does not appear on the front surface of the analog speed meter display member 3, and the analog speed meter display member 3 has a preferable state. The dark-colored background portion, the analog speed meter display part, and other necessary display parts, and the beltlike colored portion are printed on the print portion.

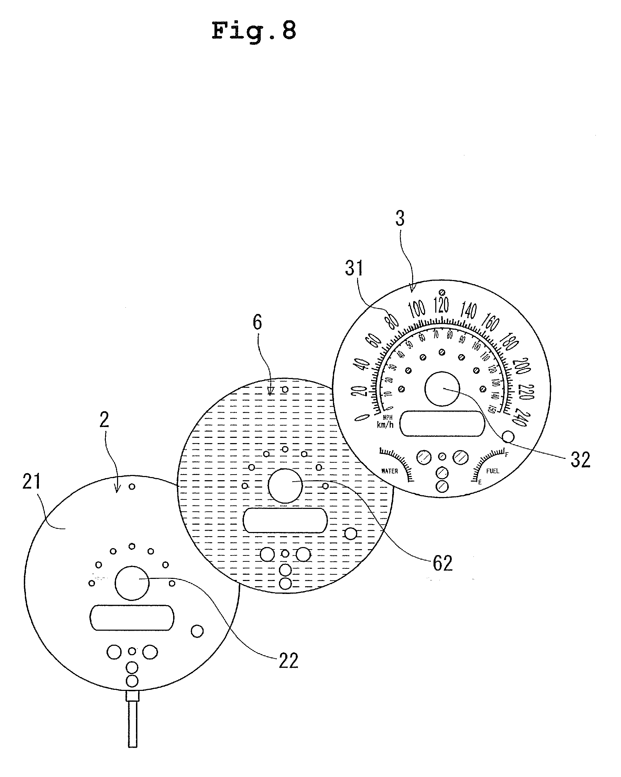

Like a meter display altering apparatus of an embodiment shown in Fig. 8, a thin film-shaped transparent color sheet may be disposed between the light source member 2 and the analog speed meter display part 3.

A transparent color sheet 6 has an opening 62 corresponding to the opening (for example, through-hole 22 for passing the pointer therethrough) of the light source member 2, covers the surface of the light source member 2, and alters the hue of light beams emitted by the light source member 2. By using the color sheet, the meter display altering apparatus is capable of forming a unique hue and thus generating a hue in conformity to taste.

The thickness of the transparent color sheet 6 is so set that the sum of the analog speed meter display member 3 and the light source member 2 is smaller than the dimension of the clearance between the surface of the display panel part 70 of the meter indicator 7 and the pointer 72 thereof. Therefore when the light source member 2, the transparent color sheet 6, and the analog speed meter display member 3 are disposed between the display panel part 70 of the meter indicator 7 and the pointer 72 thereof, the movement of the pointer 72 is not inhibited thereby. The plate-shaped light source member 2, the thin plate-shaped analog speed meter display member 3 and the transparent color sheet 6 can be disposed between the display panel part 70 of the vehicle meter indicator and the pointer 72 of the vehicle meter indicator together.

As the color of the transparent color sheet 6, a red transparent color sheet, a blue transparent color sheet, a yellow transparent color sheet, a green transparent color sheet, and the like are used.

It is preferable that the transparent color sheet 6 covers the entire front surface of the light source member 2 and is a little larger than the light source member 2. It is also preferable that the transparent color sheet 6 is a little smaller than the analog speed meter display member.

The transparent color sheet 6 has the opening 62 for allowing the pointer 72 to pass therethrough without separating the pointer 72 from the meter indicator 7, and an open portion 63 for making the distance display portion visible, open portions 64a through 64m for allowing the auxiliary light emission display portions 74a through 74m to be visible, and an open portion 65 for inserting the button 75 for the distance display portion therethrough.

The vehicle meter display altering apparatus of the present invention has the thin plate-shaped light source member consisting of the electroluminescent element and having a surface in a substantially solid color; and the thin plate-shaped analog speed meter display member covering the entire front surface of the thin plate-shaped light source member. The thin plate-shaped analog speed meter display member which can be designed appropriately and easily covers the entire front surface of the thin plate-shaped light source member. Therefore it is unnecessary to perform specific printing on the thin plate-shaped light source member and possible to customize almost the entire front surface of the display panel part having the analog speed meter display and design the display panel part easily as desired.

Further because the thin plate-shaped light source member and the thin plate-shaped analog speed meter display member have the opening for passing the pointer therethrough without separating the pointer from the speed meter, the pointer can be mounted thereon without separating the pointer therefrom. It is possible to accomplish removal of the thin plate-shaped light source member and the thin plate-shaped analog speed meter display member and restoration thereof to the standard state.

## Claims

1. A vehicle meter display altering apparatus, for use in a vehicle meter indicator, essentially including a display panel part having an analog speed meter display; and a pointer for said analog speed meter display,
said vehicle meter display altering apparatus comprising:
a thin plate-shaped light source member which has an opening for allowing said pointer to pass therethrough without separating said pointer from said vehicle meter indicator and is made of an electroluminescent element, and said thin plate-shaped light source member has a configuration corresponding to that of said display panel part, and is capable of covering almost said entire front surface of said display panel part including said analog speed meter display, and said thin plate-shaped light source member has a surface in a substantially solid color and is removably mounted on said display panel part;
a thin plate-shaped analog speed meter display member having an analog speed meter display part which corresponds to said analog speed meter display of said vehicle meter indicator, has a display mode different from that of said analog speed meter display, and is illuminated from a back surface thereof by said thin plate-shaped light source member, and an open part, provided at a position corresponding to said opening of said thin plate-shaped light source member, for allowing said pointer to pass therethrough without separating said pointer from said vehicle meter indicator, and said thin plate-shaped analog speed meter display member is placed on or fixed to a front surface of said thin plate-shaped light source member to cover said entire front surface of said thin plate-shaped light source member; and
a driver for said thin plate-shaped light source member connectable with a power unit for a vehicle.

2. A vehicle meter display altering apparatus according to claim 1, wherein said thin plate-shaped light source member and said thin plate-shaped analog speed meter display member can be disposed between said display panel part of said vehicle meter indicator and said pointer of said vehicle meter indicator, and the sum of thickness of said thin plate-shaped light source member and thickness of said thin plate-shaped analog speed meter display member is smaller than the dimension of a clearance between said display panel part of said vehicle meter indicator and said pointer of said vehicle meter indicator.

3. A vehicle meter display altering apparatus according to claim 1, wherein said thin plate-shaped analog speed meter display member is made of a transparent film base material and has a dark-colored background portion which is not made substantially bright by light beams emitted by said thin plate-shaped light source member and an analog speed meter display part printed in a white color or a light color and is made bright by said light beams emitted by said thin plate-shaped light source member.

4. A vehicle meter display altering apparatus according to claim 3, wherein said thin plate-shaped analog speed meter display member has a beltlike colored portion, printed in a color different from that of said dark-colored background portion, which surrounds said analog speed meter display part.

5. A vehicle meter display altering apparatus according to claim 3 or 4, wherein said thin plate-shaped analog speed meter display member is made of a transparent film base material and has a print portion formed on a back surface thereof; and said print portion has said dark-colored background portion and said analog speed meter display part.

6. A vehicle meter display altering apparatus according to any one of claims 1 through 5, further comprising a thin film-shaped transparent color sheet which is disposed between said thin plate-shaped light source member and said thin plate-shaped analog speed meter display member, has an opening corresponding to said opening of said thin plate-shaped light source member, covers a front surface of said thin plate-shaped light source member, and alters a hue of light beams emitted by said thin plate-shaped light source member.

7. A vehicle meter display altering apparatus according to claim 6, wherein said thin plate-shaped light source member, said thin plate-shaped analog speed meter display member and said thin film-shaped transparent color sheet can be disposed between said display panel part of said vehicle meter indicator and said pointer of said vehicle meter indicator, and the sum of thickness of said thin plate-shaped light source member, thickness of said thin plate-shaped analog speed meter display member and thickness of said thin film-shaped transparent color sheet is smaller than the dimension of a clearance between said display panel part of said vehicle meter indicator and said pointer of said vehicle meter indicator.

8. A vehicle meter display altering apparatus according to any one of claims 1 through 7, wherein said thin plate-shaped analog speed meter display member covers an entire front surface of said thin plate-shaped light source member and is a little larger than said thin plate-shaped light source member.

9. A vehicle meter display altering apparatus according to any one of claims 1 through 8, wherein said display panel part has a distance display portion; said thin plate-shaped light source member has an open portion for allowing said distance display portion to be visible; and said has thin plate-shaped analog speed meter display member has an open portion or a transparent portion for allowing said distance display portion to be visible.

10. A vehicle meter display altering apparatus according to any one of claims 1 through 9, wherein said display panel part has auxiliary light emission display portions other than said analog speed meter display; and said thin plate-shaped light source member has open portions for allowing said auxiliary light emission display portions to be visible; and said thin plate-shaped analog speed meter display member has transparent portions for allowing said auxiliary light emission display portions to be visible.

11. A vehicle meter display altering apparatus according to any one of claims 1 through 10, wherein said display panel part has a fuel display portion; said thin plate-shaped analog speed meter display member has a fuel display portion corresponding to said fuel display portion of said display panel part respectively and different therefrom in a display mode; and said thin plate-shaped light source member unvisibly covers said fuel display portion of said display panel part and illuminates a neighborhood of said fuel display portion of said thin plate-shaped analog speed meter display member from a back surface side thereof.

12. A vehicle meter display altering apparatus according to any one of claims 1 through 11, wherein said display panel part has a water temperature display portion; said thin plate-shaped analog speed meter display member has a water temperature display portion corresponding to said water temperature display portion of said display panel part respectively and different therefrom in a display mode; and said thin plate-shaped light source member unvisibly covers said water temperature display portion of said display panel part and illuminates a neighborhood of said water temperature display portion of said thin plate-shaped analog speed meter display member from a back surface side thereof.

13. A vehicle meter display altering apparatus according to any one of claims 1 through 12, wherein said driver for said thin plate-shaped light source member has a function of adjusting a color of a light beam emitted by said thin plate-shaped light source member.

14. A vehicle meter display altering apparatus according to any one of claims 1 through 13, wherein said thin plate-shaped light source member comprises a thin plate-shaped light source member body; and a connection cable having a connector, disposed at one end thereof, which is to be removably connected with said thin plate-shaped light source member body and a connector, disposed at other end thereof, which is to be removably connected with said driver for said thin plate-shaped light source member.
